**Europäisches Patentamt**

**European Patent Office**

**Office européen des brevets**

(19)

(11) Veröffentlichungsnummer: **0 104 172 B1**

(12) **EUROPÄISCHE PATENTSCHRIFT**

(45) Veröffentlichungstag der Patentschrift:
**15.07.87**

(21) Anmeldenummer: **82901714.4**

(22) Anmeldetag: **30.03.82**

(86) Internationale Anmeldenummer:
**PCT/DE 82/00074**

(87) Internationale Veröffentlichungsnummer:
**WO 83/03478 (13.10.83** Gazette 83/24)

(51) Int. Cl.⁴: **G 01 S 15/88,** G 01 S 7/52,
G 01 S 15/14

(54) EINRICHTUNG ZUR BESTIMMUNG EINES RELATIVABSTANDS BEI EINER ZYLINDER-KOLBEN-EINHEIT.

(43) Veröffentlichungstag der Anmeldung:
**04.04.84 Patentblatt 84/14**

(45) Bekanntmachung des Hinweises auf die Patenterteilung:
**15.07.87 Patentblatt 87/29**

(84) Benannte Vertragsstaaten:
**AT BE CH DE FR LI LU NL SE**

(56) Entgegenhaltungen:
EP - A - 0 037 196
DE - A - 2 444 222
FR - A - 2 041 006
GB - A - 1 602 006
US - A - 3 184 969
US - A - 3 589 196
US - A - 4 205 553
US - A - 4 210 969

IEEE Transactions on Sonics and Ultrasonics, vol. 26, no. 6, November 1979, (New York, US), J.H. Goll "The design of broad-band fluid-loaded ultrasonic transducers", Seiten 385-393

(73) Patentinhaber: **REUTER, Martin, 60 Allacher Strasse, D-8047 Karlsfeld (DE)**
Patentinhaber: **KÖNIG, Johannes, 60 Allacher Strasse, D-8047 Karlsfeld (DE)**

(72) Erfinder: **REUTER, Martin, 60 Allacher Strasse, D-8047 Karlsfeld (DE)**
Erfinder: **KÖNIG, Johannes, 60 Allacher Strasse, D-8047 Karlsfeld (DE)**

(74) Vertreter: **Patentanwälte Schaumburg & Thoenes, Mauerkircherstrasse 31 Postfach 86 07 48, D-8000 München 80 (DE)**

## Beschreibung

Die Erfindung betrifft eine Einrichtung zur Bestimmung des Relativabstandes zwischen den sich gegenüberliegenden Stirnseiten eines Zylinders und eines Kolbens einer Zylinder-Kolben-Einheit, die einen mit einem fliessfähigen Medium gefüllten Zylinderraum aufweist, umfassend einen an der einen der beiden sich gegenüberliegenden Stirnseiten gehaltenen Ultraschallwandler, der bei Anregung mittels eines elektrischen Anregungsimpulses eine Gruppe von Ultraschallschwingungen in Richtung auf die andere Stirnseite des Zylinderraums hin abgibt und bei Beaufschlagung mit Ultraschallschwingungen ein entsprechendes elektrisches Ausgangssignal abgibt, einen elektrischen Impulserzeuger, mit dessen Ausgang der Wandler gekoppelt ist, und eine Auswerteschaltung mit Mitteln zur Messung der Messschwingungs-Laufzeit von Ultraschallschwingungen zwischen dem Erzeugen eines Anregungsimpulses und dem Auftreten einer entsprechenden Messschwingungsgruppe im Ausgangssignal des Wandlers.

Eine Einrichtung der vorstehend genannten Art ist beispielsweise aus der GBA 1 602 006 bekannt. Die dort beschriebene Einrichtung hat den Nachteil, dass die Bestimmung des Abstandes aus der Laufzeit des Messsignales nur dann möglich ist, wenn die Temperatur und der Druck des Ausbreitungsmediums innerhalb des Zylinders bekannt sind bzw. sich gegenüber einem Zustand nicht ändern, bei dem die Messeinrichtung geeicht wurde, da die Laufzeit des Ultraschallsignales innerhalb des Ausbreitungsmediums von dessen Temperatur und Druck abhängt. Gerade in druckmittelbetriebenen Arbeitszylindern können sich jedoch Druck und Temperatur des Arbeitsmediums erheblich ändern, so dass die bekannte Einrichtung für praktische Anwendungszwecke nicht genau genug ist. Darüber hinaus besitzt der bekannte Wandler einen mässigen Wirkungsgrad und kann bei hohen Arbeitsdrücken in einem Arbeitszylinder nicht verwendet werden.

Der Erfindung liegt die Aufgabe zugrunde, eine Einrichtung der eingangs genannten Art anzugeben, die auch bei Änderung der Temperatur und des Druckes des Arbeitsmediums in der Zylinder-Kolben-Einheit eine präzise Messung des Abstandes der einander zugekehrten Stirnflächen von Zylinder und Kolben ermöglicht und die auch in Arbeitszylindern bei hohen Betriebsdrücken verwendbar ist.

Diese Aufgabe wird erfindungsgemäss dadurch gelöst, dass innerhalb des Zylinderraumes eine Referenzstrecke vorgesehen ist, in die an einem Ende Gruppen von Ultraschallschwingungen eingespeist werden und die an ihrem anderen Ende eine diese Ultraschallschwingungen reflektierende Referenz-Reflexionsfläche aufweist, dass die Auswerteschaltung Mittel zur Messung der Ist-Referenzlaufzeit von Ultraschallschwingungen in der Referenzstrecke sowie Rechenmittel umfasst, die ein aufgrund der Messung der Messschwingungslaufzeit erhaltenes Messsignal in Abhängigkeit von der Abweichung der Ist-Referenzlaufzeit von einer vorgegebenen Soll-Referenzlaufzeit verändern, und dass der Wandler einen inkompressiblen Träger, einen parallel zu einer ebenen, in einer Normalquerschnittsfläche des Zylinders liegenden Fläche des Trägers zum Zylinderraum hin im Abstand von dieser Fläche liegenden, plättchenförmigen pierzoelektrischen Schwinger, eine zu diesem parallele, zur anderen Stirnseite hin weisende, von dem fliessfähigen Medium beaufschlagte Schallabstrahlungsfläche sowie Mittel zur Wellenwiderstands-Fehlanpassung zwischen dem Schwinger und dem Träger und Mittel zur Wellenwiderstands-Anpassung zwischen dem Schwinger und der Schallabstrahlungsfläche umfasst.

Bei der erfindungsgemässen Einrichtung wird also auf einer Stirnseite des Zylinderraums ein Paket von aufeinanderfolgenden Ultraschallschwingungen ausgesandt, an der gegenüberliegenden Stirnseite reflektiert und dann auf der ersten Stirnseite wieder aufgefangen. Da die ein Mass für den Abstand der einander gegenüberstehenden Stirnseiten darstellende Laufzeit der Ultraschallschwingungen im Zylinderraum jedoch von der Ausbreitungsgeschwindigkeit des Ultraschalls in dem den Zylinderraum ausfüllenden fliessfähigen Medium abhängt und sich mit der Temperatur, dem Druck und der chemischen Zusammensetzung dieses Mediums ändert, werden hierdurch bedingte Messfehler kompensiert, indem mittels der Referenzstrecke ein Referenzsignal erzeugt wird, das mit dem die Laufzeit der Messschwingungsgruppe angebenden Messsignal im Sinne von dessen Korrektur verknüpft wird. Die Impedanzanpassung in Abstrahlungsrichtung und die Impedanzfehlanpassung in der entgegengesetzten Richtung führen zu einem wesentlich höheren Wirkungsgrad des Wandlers.

Die Verwendung einer Referenzstrecke im Zusammenhang mit Abstandsmessungen auf der Grundlage von Ultraschall-Laufzeitmessungen ist aus US-A-4 210 969 bekannt. Die Referenz-Messwerte werden zur Kompensation von Umgebungseinflüssen auf die Messwerte für den gesuchten Abstand verwendet.

Aus einem Aufsatz in IEEE Trans. on Sonics and Ultrasonics, vol. 26, No. 6, Seiten 385 bis 393, 1979 ist es darüber hinaus zwar bekannt, eine Impedanzanpassung zwischen einem Wandler und dem Ausbreitungsmedium vorzusehen. Eine gleichzeitige Fehlanpassung zwischen dem Wandler und dem Ausbreitungsmedium in der der Abstrahlungsrichtung entgegengesetzten Richtung ist dagegen nicht vorgesehen.

Der Wandler kann so aufgebaut werden, dass er die Baugrösse der Zylinder-Kolben-Einheit nicht vergrössert. Die zum Anregen des Wandlers und zur Auswertung von dessen Ausgangssignalen erforderlichen elektrischen Schaltungsteile können leicht an einer geeigneten Stelle untergebracht werden, an der sie nicht zu einer baulichen Vergrösserung der Maschine oder beispielsweise eines Hydrauliksystems führen, in dem die Zylinder-Kolben-Einheit liegt.

Ausgestaltungen der Erfindung ergeben sich aus den Unteransprüchen.

Die Erfindung wird im folgenden anhand der Zeichnungen näher erläutert, in denen ein Ausführungsbeispiel dargestellt ist. Es zeigt:

Fig. 1 eine Kolben-Zylinder-Einheit und eine Abstandsmesseinrichtung gemäss der Erfindung, wobei die Kolben-Zylinder-Einheit und der Wandler der Abstandsmesseinrichtung perspektivisch, die übrigen Teile der Abstandsmesseinrichtung dagegen als schematisches Blockschaltbild dargestellt sind;

Fig. 2 in seitlicher perspektivischer Darstellung den Wandler der Abstandsmesseinrichtung gemäss Fig. 1;

Fig. 3 in einem etwas detaillierteren Blockschaltbild die Auswerteschaltung der Abstandsmesseinrichtung gemäss Fig. 1 und

Fig. 4 ein Zeitdiagramm zur Erläuterung der Wirkungsweise der Auswerteschaltung gemäss Fig. 3

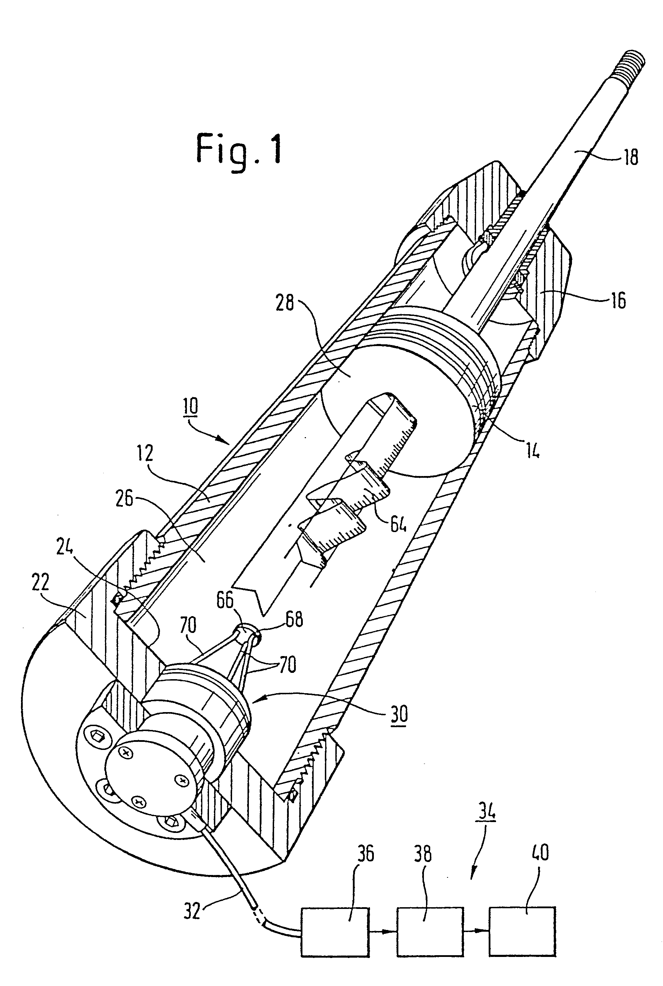

In Fig. 1 ist unter vereinfachender Weglassung von Ventilen und Leitungen die Zylinder-Kolben-Einheit 10 eines Hydrauliksystems dargestellt. Sie umfasst einen Zylinder 12, einen darin längsverschiebbar geführten Kolben 14 und eine durch eine Stirnwand 16 des Zylinders 12 hindurch geführte Kolbenstange 18. Eine weitere Stirnwand 22 des Zylinders 12 bildet innenseitig eine erste Stirnseite 24 eines kolbenstangenfernen Zylinderraumes 26, dessen zweite Stirnseite 28 am Kolben 14 liegt.

Beispielsweise zur Regelung der Lage eines von der Einheit 10 angetriebenen Werkzeugs oder Maschinenteils oder der Austrittsgeschwindigkeit einer Kunststoffmasse aus einer Presskammer, deren Presskolben mittels der Einheit 10 angetrieben wird, wird fortlaufend der Relativabstand zwischen Zylinder 12 und Kolben 14 als Abstands-Istwert bestimmt, woraus dann durch Differenzbildung mit einem Sollwert, durch zeitliche Differentiation zur Bildung eines Ist-Geschwindigkeitswertes usw. weitere interessierende Grössen abgeleitet werden können. Zur Bestimmung des Relativabstands zwischen Zylinder 12 und Kolben 14 ist in der Stirnwand 22 – bei anderen möglichen Ausführungsformen zumindest nahe der ersten Stirnseite 24 – ein elektrischer Ultraschallwandler 30 angeordnet, der über ein Kabel 32 mit einer Auswerteschaltung 34 verbunden ist. Letztere besteht beim Ausführungsbeispiel aus einer Eingabe-Ausgabe-Einheit 36, einem Prozessor 38 und einem Datenausgabegerät 40, bei dem es sich um ein in Längeneinheiten geeichtes Anzeigegerät oder um einen Drucker handeln kann.

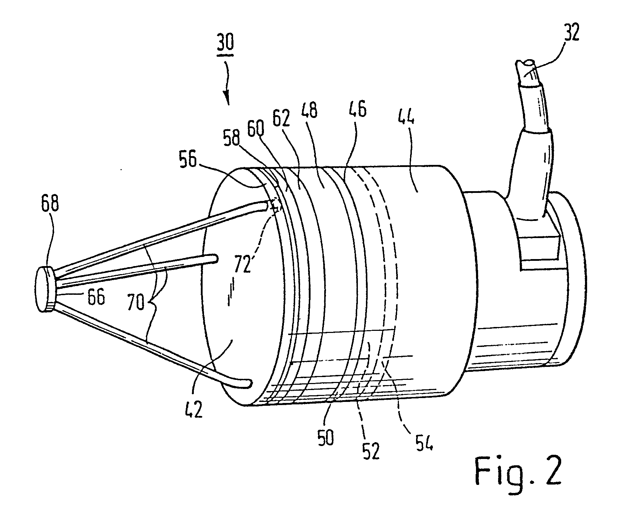

Der in Fig. 2 näher dargestellte Wandler 30 ist so ausgebildet und angeordnet, dass er bei Anregung mittels mindestens eines elektrischen Anregungsimpulses eine Gruppe von Ultraschallschwingungen in Richtung auf die zweite Stirnseite 28 abgibt und bei Beaufschlagung mit Ultraschallschwingungen ein entsprechendes elektrisches Ausgangssignal erzeugt. Der Wandler 30 hat im wesentlichen eine zylindrische Gestalt mit einer die Stirnfläche des Zylinders bildenden, der zweiten Stirnfläche 28 des Zylinderraumes 26 zugewandten, von dem fliessfähigen Medium im Zylinderraum 26 beaufschlagten, ebenen Schallabstrahlungsfläche 42. An dem der Schallabstrahlungsfläche 42 gegenüberliegenden Ende ist der Wandler 30 von einem aus einem inkompressiblen Material und beim Ausführungsbeispiel aus Stahl bestehenden Träger 44 gebildet, der eine zur Schallabstrahlungsfläche 42 parallele ebene Fläche aufweist, deren Umfang 46 in Fig. 2 erkennbar ist. Zwischen der Schallabstrahlungsfläche 42 und der Fläche 46 liegt parallel und beabstandet zu beiden ein plättchenförmiger, piezoelektrischer Schwinger 48 aus einem geeigneten Keramikmaterial, der beidseitig mit nicht dargestellten Elektroden versehen ist. Die Dicke des Schwingers 48 ist gleich einer halben Wellenlänge von Ultraschallschwingungen in dem verwendeten Keramikmaterial gewählt, wobei als Frequenz der Ultraschallschwingungen diejenige zugrunde gelegt ist, mit der vom Wandler 30 Gruppen von aufeinanderfolgenden Ultraschallschwingungen ausgesandt werden. Diese Frequenz liegt beim Ausführungsbeispiel bei 500 kHz. Der Durchmesser des Schwingers 48 und der gleiche Durchmesser der Schallabstrahlungsfläche 42 müssen ein Mehrfaches der Ultraschallwellenlänge solcher Ultraschallschwingungen in dem fliessfähigen Medium betragen; beim Ausführungsbeispiel liegt der genannte Durchmesser bei 20 mm.

Damit die dem Schwinger 48 durch elektrische Anregungsimpulse mitgeteilte Energie möglichst weitgehend in Ultraschallenergie umgesetzt und nach einer Reflexion an der zweiten Stirnseite 28 zurückkehrende Ultraschallschwingungen möglichst weitgehend vom Wandler 30 aufgenommen und wieder in elektrische Ausgangssignale umgesetzt werden, sind Mittel zur Wellenwiderstands-Fehlanpassung zwischen dem Schwinger 48 und dem Träger 44 sowie Mittel zur Wellenwiderstands-Anpassung zwischen dem Schwinger 48 und der Schallabstrahlungsfläche 42 vorgesehen. Eine Fehlanpassung kommt im wesentlichen dadurch zustande, dass Schichten stark unterschiedlichen Wellenwiderstandes miteinander abwechseln. Der Ultraschall-Wellenwiderstand einer Schicht hängt im wesentlichen von der Kompressibilität ihres Materials und von der Ultraschallgeschwindigkeit in diesem Material ab. Der Wellenwiderstand des Schwingers 48 und des Trägers 44 liegt relativ hoch, und zur Fehlanpassung ist beim Ausführungsbeispiel zwischen ihnen ein $\lambda/4$-Plättchen 50 aus relativ kompressiblem Material, nämlich einem Epoxydharz, eingefügt. Als $\lambda/4$-Plättchen wird ein Plättchen bezeichnet, dessen Dicke bei der gegebenen Frequenz des Schwingers 48 ein Viertel der Ultraschallwellenlänge im Material des Plättchens beträgt. Gewünschtenfalls können zwischen dem Schwinger 48 und Träger 44 weitere Plättchen von abwechselnd hohem und niedrigem Wellenwiderstand vorgesehen sein, z.B. ein $\lambda$/4-Plättchen 52 aus Stahl und ein weiteres $\lambda$/4-Plättchen 54 aus Epoxydharz, wie dies gestrichelt angedeutet ist; die dem Schwinger 48 zugewandte, oben erwähnte Fläche des Trägers 44 länge dann benachbart dem Plättchen 54.

Eine Wellenwiderstands-Anpassung zwischen dem Schwinger 48 und dem die Schallabstrahlungsfläche 42 beaufschlagenden fliessfähigen Medium erfolgt im wesentlichen dadurch, dass sich im Raum zwischen Schwinger 48 und Schallabstrahlungsfläche 42 der Wellenwiderstand ausgehend von demjenigen des Schwingers 48 auf denjenigen des fliessfähigen Mediums herunter verringert. Nimmt man an, dass das fliessfähige Medium eine übliche hydraulische Druckflüssigkeit ist, so liegt der Wellenwiderstand von Epoxydharz annähernd beim Doppelten und der Wellenwiderstand von für den Schwinger 48 handelsüblichem Keramikmaterial beim Zwanzigfachen des Wellenwiderstands der Druckflüssigkeit. Zur Wellenwiderstands-Anpassung sind nun mehrere und im Ausführungsbeispiel vier $\lambda$/4-Plättchen 56, 58, 60, 62 vorgesehen, die aneinander bzw. an dem Schwinger 48 anliegen und deren Wellenwiderstände derart gewählt sind, dass sie entsprechend einer geometrischen Reihe gestuft vom Schwinger 48 zur Druckflüssigkeit hin abnehmen. Das Plättchen 62 besteht aus einem Glas mit einem gegenüber der Druckflüssigkeit annähernd 15fach höheren Wellenwiderstand. Das Plättchen 60 besteht aus einem Glas mit gegenüber der Druckflüssigkeit annähernd 7fach höherem Wellenwiderstand. Das Plättchen 58 ist aus einer üblichen Schaltungsplatine geschnitten, die aus einem mit Epoxydharz getränkten Glasfasermaterial besteht, und hat einen gegenüber der Druckflüssigkeit annähernd 4fach höheren Wellenwiderstand. Schliesslich besteht das die Schallabstrahlungsfläche 42 bildende Plättchen 56 ebenso wie das Plättchen 50 aus Epoxydharz mit einem gegenüber der Druckflüssigkeit annähernd doppelt so hohen Wellenwiderstand. Alle Plättchen 50, 56, 58, 60, 62 und ggf. 52, 54, der Schwinger 48 und der an das Plättchen 50 bzw. an das Plättchen 54 anschliessende zylindrische Bereich des Trägers 44 sind im übrigen in nicht dargestellter Weise auf ihren Mantelflächen mit einem der mechanischen Verbindung dieser Teile dienenden Epoxydharzüberzug versehen, während die Verbindung des Schwingers 48 und der Plättchen 50, 56, 58, 60, 62 sowie ggf. 52 und 54 untereinander auf ihren aneinander anliegenden Flächen durch dünne, nicht dargestellte Kleberschichten erfolgen kann.

Mittels des Wandlers 30 wird, gesteuert und teilweise ausgewertet durch die Eingabe-Ausgabe-Einheit 36 (Fig. 1), eine Gruppe von aufeinanderfolgenden Ultraschallschwingungen ausgesandt. Diese Ultraschallschwingungen gelangen zum grössten Teil zur zweiten Stirnseite 28 des Zylinderraumes 26 und werden dort reflektiert, wie dies durch die Pfeilfigur 64 in Fig. 1 angedeutet ist. Sofern die zweite Stirnfläche 28 nicht eben ist und senkrecht zur Achse des Zylinders 12 verläuft, kann ein Tripelspiegel, eine zentrische konische Einfräsung im Kolben 14 mit gleichseitig-rechtwinkligem Querschnitt oder eine in der zweiten Stirnseite 28 gebildete Ringnut mit gleichseitig-rechtwinkligem Querschnitt vorgesehen sein, um die im Bereich der zweiten Stirnseite 28 reflektierten Ultraschallschwingungen genau in Richtung auf den Wandler 30 zurückkehren zu lassen. Die ausgesandte Gruppe von Ultraschallschwingungen kehrt so nach einer dem Abstand zwischen Wandler 30 und zweiter Stirnseite 28 linear proportionalen Messschwingungs-Laufzeit als Messschwingungsgruppe zum Wandler 30 zurück, wo sie aufgenommen wird, in eine Messschwingungsgruppe im elektrischen Ausgangssignal des Wandlers 30 umgeformt wird und zur Erzeugung eines Messsignals mittels des Prozessors 38 dient, das einem gesuchten Relativabstand zwischen Zylinder 12 und Kolben 14 proportional ist und das vom Datenausgabegerät 40 angezeigt werden kann.

Änderungen der Ultarschall-Ausbreitungsbedingungen im Zylinderraum 26 beispielsweise aufgrund von Änderungen der Temperatur oder des Druckes des fliessfähigen Mediums könnten das erhaltene Messsignal verfälschen. Zur Kompensation hierdurch bedingter Änderungen des Messsignals wird das fliessfähige Medium des Zylinderraums 26 durch eine Referenzstrecke vorgegebener Länge hindurchgeführt, an deren erstem Ende eine Gruppe von Ultraschallschwingungen ausgesandt wird und nach Reflexion an einer das zweite Ende der Referenzstrecke bildenden Referenz-Reflexionsfläche als Referenzschwingungsgruppe wieder aufgenommen wird, und durch Messung der zwischen dem Aussenden der Gruppe von Ultraschallschwingungen von dem ersten Ende und dem Aufnehmen der Referenzschwingungsgruppe vergehenden Ist-Referenzlaufzeit wird ein dieser proportionales Referenzsignal erzeugt, aufgrund dessen die erwähnte Kompensation erfolgt. Wenn beispielsweise die Messung der Ist-Referenzlaufzeit ergibt, dass diese das 1,1fache einer beispielsweise von einem temperaturstabilisierten Quarzoszillator vorgegebenen Soll-Referenzlaufzeit beträgt, so kann davon ausgegangen werden, dass die vom Messsignal dargestellte Messschwingungsgruppen-Laufzeit das 1,1fache derjenigen richtigen Laufzeit beträgt, die dem tatsächlichen Relativabstand entspricht, weshalb der Wert des ermittelten Messsignals durch den Faktor 1,1 zu dividieren ist, um ein berichtigtes, genau dem Relativabstand proportionales Messsignal zu erhalten. Diese Kompensationsrechnung wird im Prozessor 38 vorgenommen.

Die Referenzstrecke kann grundsätzlich ausserhalb des Zylinderraumes 26 und entfernt von der vom Wandler 30 begrenzten Messstrecke angeordnet sein, solange sichergestellt ist, dass in der Referenzstrecke dieselben Bedingungen hinsichtlich Temperatur, Druck, physikalisch-chemischer Zusammensetzung des fliessfähigen Mediums usw. herrschen wie im Zylinderraum 26. So kann es beispielsweise zweckmässig sein, die Hydraulikflüssigkeit mehrerer parallel arbeitender Zylinder-Kolben-Einheiten durch einen gemeinsamen Referenzzylinder zu führen, in dem die Referenzstrecke in im wesentlichen gleicher Weise gebildet ist, wie dies anhand von Fig. 1 bereits für eine Messstrecke beschrieben wurde. Die Referenzstrecke weist dabei also einen gesonderten Wandler zur Aussendung und zum Empfang von Ultraschallschwingungen auf. Für die meisten Anwendungsfälle ist es jedoch hinsichtlich des Bauaufwands und hinsichtlich der erzielbaren Genauigkeit der gewünschten Kompensation am günstigsten, wenn wie beim Ausführungsbeispiel der Wandler 30 der Messstrecke und der Referenzstrecke gemeinsam ist, indem im Zylinderraum 26 in geringem Abstand von dem Wandler 30 eine feststehende Referenz-Reflektionsfläche 66 vorgesehen ist. Die Referenz-Reflektionsfläche 66 ist beim Ausführungsbeispiel von der dem Wandler 30 zugewandten Rückseite eines aus Stahl bestehenden Plättchens 68 gebildet, das an seinem Rand mittels dreier aus Draht gebildeter Bügel 70 am Wandler 30 befestigt ist. Die Bügel 70 tauchen in die Schallabstrahlungsfläche 42 nahe deren Aussenumfang ein, durchsetzen das Plättchen 56 und sind im Plättchen 58 in Lötösen 72 verlötet und gehalten, wie in Fig. 2 angedeutet ist. In fertigungstechnischer Hinsicht ist es dabei günstig, dass das Plättchen 58 zur Erzielung des gewünschten Wellenwiderstandes aus dem Material üblicher Schaltungsplatinen geschnitten ist, in denen Lötösen 72 in üblicher einfacher Weise gebildet und verlötet werden können. Nach dem Verlöten der Bügel 70 kann dann das Plättchen 56 mit der Schallabstrahlungsfläche 42 in einfacher Weise durch Vergiessen der übrigen Bestandteile des Wandlers 30 mit Epoxydharz gebildet werden.

Der Abstand der Referenz-Reflektionsfläche 66 von der Schallabstrahlungsfläche 42 des Wandlers 30 liegt beim Ausführungsbeispiel bei 40 mm und ist damit geringer als der geringste einstellbare Abstand zwischen der zweiten Stirnseite 28 und der ersten Stirnseite 24 des Zylinderraumes 26, um einerseits den Stellbereich des Kolbens 14 innerhalb des Zylinders 12 nicht unnötig einzuschränken und um andererseits zu erreichen, dass von dem Wandler 30 nach dem Aussenden einer Gruppe von Ultraschallschwingungen zunächst eine Referenzschwingungsgruppe und danach klar unterscheidbar eine Messschwingungsgruppe aufgenommen wird, die in zeitlichem Abstand nacheinander im Ausgangssignal des Wandlers 30 erscheinen. Die Referenz-Reflektionsfläche 66 ist weiter wesentlich kleiner als die Schallabstrahlungsfläche 42; beim Ausführungsbeispiel liegt das Flächenverhältnis bei 3% bis 4%. Hierdurch wird sichergestellt, dass der grösste Teil der abgestrahlten Ultraschallenergie zur zweiten Stirnseite 28 des Zylinderraums 26 und nach Reflexion zurück zum Wandler 30 gelangt; zusammen mit der aufgrund des Aufbaus des Wandlers 30 erhaltenen Eigenschaft, elektrische Anregungsimpulse weitgehend ohne Energieverlust in Ultraschallschwingungen und umgekehrt Ultraschallschwingungen in elektrische Ausgangssignale umzusetzen, wird so die Möglichkeit geschaffen, einerseits noch genügend grosse und zu einer genauen Kompensation geeignete Referenzschwingungsgruppen zu empfangen und andererseits Abstände bis zur Grössenordnung von 6000 mm zwischen Wandler 30 und zweiter Stirnseite 28 mit grosser Genauigkeit zu messen.

Damit eine an der Referenz-Reflexionsfläche 66 reflektierte Referenzschwingungsgruppe nach einer (ohnehin nur geringfügig erfolgenden) Reflexion an der Schallabstrahlungsfläche 42 nicht erneut in der Referenzstrecke hin- und herläuft, also zur Vermeidung von störenden Referenzechos, ist zweckmässig die Referenz-Reflexionsfläche 66 gegenüber einer zur Abstrahlungsfläche 42 parallelen Stellung geringfügig geneigt angeordnet; beim Ausführungsbeispiel nimmt die Flächennormale der Referenz-Reflexionsfläche 66 einen Winkel von 2° zur Längsachse des Zylinders 12 ein, zu der der Wandler 30 konzentrisch angeordnet ist.

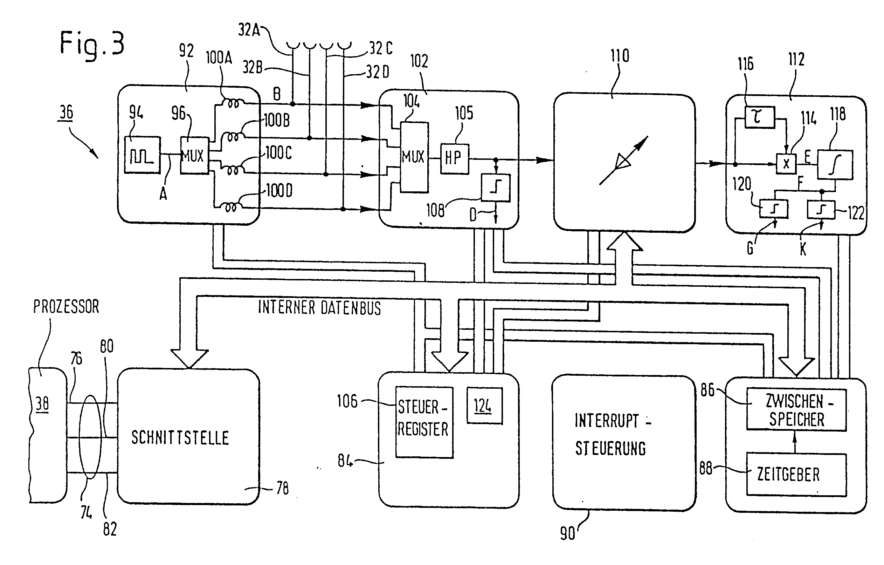

Der Aufbau der Auswerteschaltung 34 (Fig. 1) ist in Fig 3 näher dargestellt. Der Prozessor 38 wird über eine Verbindungsleitung 74 im Dialog mit der Eingabe-Ausgabe-Einheit 36 betrieben. Die Verbindungsleitung 74 umfasst eine Leitung 76 zur Übertragung von 6 Steuerbits vom Prozessor 38 zur Schnittstelle 78 der Eingabe-Ausgabe-Einheit 36, eine Leitung 80 zur Übertragung von 8 Datenbits von der Schnittstelle 78 zum Prozessor 38 und eine Leitung 82 zur Übertragung von 8 Adressbits zwischen Prozessor 38 und Schnittstelle 78 und umgekehrt. Hinsichtlich der in der Eingabe-Ausgabe-Einheit 36 ablaufenden Messvorgänge hat der Prozessor 38 eine übergeordnete regelnde Funktion und eine auswertende und insbesondere rechnende Funktion, während die programmierte Durchführung von zur Laufzeitmessung erforderlichen einzelnen Schritten unter der Steuerung durch eine Steuereinheit 84 und eine Zwischenspeicherung der dabei erhaltenen Daten in einem Zwischenspeicher 86 innerhalb der Eingabe-Ausgabe-Einheit 36 erfolgen. Die jeweils zusammen mit einer von einem Zeitgeber 88 gelieferten Zeitangabe zwischengespeicherten Daten werden je nach Erfodernis aus dem Zwischenspeicher 86 abgerufen und über die Schnittstelle 78 zum Prozessor 38 übertragen, um dort zur Berechnung der Ist-Referenzlaufzeit, der Messschwingungs-Laufzeit und eines korrigierten Messsignals bearbeitet zu werden, wobei diese Übertragung zum Prozessor 38 bedarfsweise unter Steuerung durch eine Interrupt-Steuerschaltung 90 erfolgt. So kann beispielsweise die Aussendung einer Gruppe von Ultraschallschwingungen und die Ermittlung der zeitlichen Lage einer Messschwingungsgruppe und einer Referenzschwingungsgruppe bezüglich dieser Aussendung 250mal je Sekunde erfolgen, und die dabei erhaltenen, zwischengespeicherten Daten können je nachdem, ob der Kolben 14 stillsteht oder bewegt wird und sich demgemäss keine Änderungen dieser Daten oder schnelle Änderungen dieser Daten ergeben, nur einmal je Sekunde oder auch bis zu 250mal je Sekunde zum Prozessor 38 zur Auswertung übertragen werden.

Die Eingabe-Ausgabe-Einheit 36 umfasst eine Sendeeinheit 92 zur Erzeugung von Anregeimpulsen für vier Ultraschallwandler auf Leitungen 32A bis 32D, so dass die Durchführung von Relativabstandsmessungen an vier Zylinder-Kolben-Einheiten der in Fig. 1 gezeigten Art möglich ist. Die Sendeeinheit 92 umfasst einen elektrischen Impulserzeuger 94, der zur Anregung einer Gruppe von auszusendenden Ultraschallschwingungen jeweils zwei voneinander beabstandete Rechteckimpulse erzeugt, einen dem Impulserzeuger 94 nachgeschalteten Multiplexer 96 und dessen Ausgängen nachgeschaltete und jeweils einer Leitung 32A bis 32D vorgeschaltete Drosseln 100A bis 100D. Die Drosseln 100A bis 100D bilden jeweils mit dem zugehörigen, an die Leitung 32A bis 32D angeschlossenen Wandler 30 (Fig. 1, 2) einen Schwingkreis, der auf die gewünschte Frequenz der vom Wandler 30 auszusendenden Ultraschallschwingungen, im Ausführungsbeispiel 500 kHz abgestimmt ist, und die Länge und der zeitliche Abstand der vom Impulserzeuger 94 erzeugten Rechteckimpulse ist auf die Eigenfrequenz der genannten Schwingkreise so abgestimmt, dass diese vom Impulserzeuger 94 möglichst stark angeregt werden können. Der Multiplexer 96 bewirkt eine Einschaltung der Leitungen 32A bis 32D in zyklischer Reihenfolge.

Zur Auswertung der Ausgangssignale der an die Leitungen 32A bis 32D angeschlossenen Wandler sind die Leitungen 32A bis 32D auch an eine Empfangseinheit 102, und zwar an die Eingänge eines darin vorgesehenen Multiplexers 104 angeschlossen. Die Multiplexer 96, 104 sind von einem in der Steuereinheit 84 vorgesehenen Steuerregister 106 derart gesteuert, dass bei der Abgabe von Anregeimpulsen auf eine Leitung, beispielsweise die Leitung 32A, der zugehörige Eingang des Multiplexers 104 zunächst geschlossen ist, bis die durch diese Anregeimpulse angeregten Ultraschallschwingungen abgeklungen sind, worauf erst der zugehörige Eingang des Multiplexers 104 geöffnet wird, um die dann auf der Leitung (im Beispiel der Leitung 32A) als Ausgangssignale des angeschlossenen Wandlers erscheinenden Referenz- und Messschwingungsgruppen zur Verarbeitung aufzunehmen. Dem Multiplexer 104 ist ein Hochpass 105 nachgeschaltet, bei dem es sich zweckmässigerweise um einen Vorverstärker mit einem Hochpassverhalten zweiter Ordnung handelt, und an dessen Ausgang ist ein Komparator 108 angeschlossen. Dieser dient in noch näher zu erläuternder Weise zur Ermittlung eines das Ende der Ist-Referenzlaufzeit markierenden Nulldurchgangs in der Referenzschwingungsgruppe und zur Ermittlung eines das Ende der Messschwingungs-Laufzeit markierenden Nulldurchgangs in der Messschwingungsgruppe.

Das Ausgangssignal des Hochpasses 105 ist ausser zum Eingang des Komparators 108 auch zum Eingang eines Verstärkers 110 geführt, dessen Verstärkung von der Steuereinheit 84 her gesteuert wird, und dem Verstärker 110 ist ein Wahrscheinlichkeitsdetektor 112 nachgeschaltet. Das Eingangssignal des Wahrscheinlichkeitsdetektors 112 beaufschlagt einen Eingang eines Multipliziergliedes 114 und den Eingang eines Verzögerungsgliedes 116, dessen Ausgangssignal einem zweiten Eingang des Multipliziergliedes 114 zugeführt ist. Multiplizierglied 114 und Verzögerungsglied 116 bilden im wesentlichen eine gleichrichtend wirkende Schaltung und in der Ausführungsform eine quadrierend wirkende Schaltung. Dem Multiplizierglied 114 ist ein als Verschwindsignalintegrator ausgebildeter Integrator 118 nachgeschaltet; bei einem Verschwindsignalintegrator entspricht das Ausgangssignal im wesentlichen dem Integrationsergebnis einer veränderlichen Eingangsgrösse, nimmt jedoch beim Wert Null der Eingangsgrösse mit einer relativ grossen Zeitkonstante allmählich wieder den Wert Null an. An den Ausgang des Integrators 118 sind Schwellwertschalter 120, 122 angeschlossen.

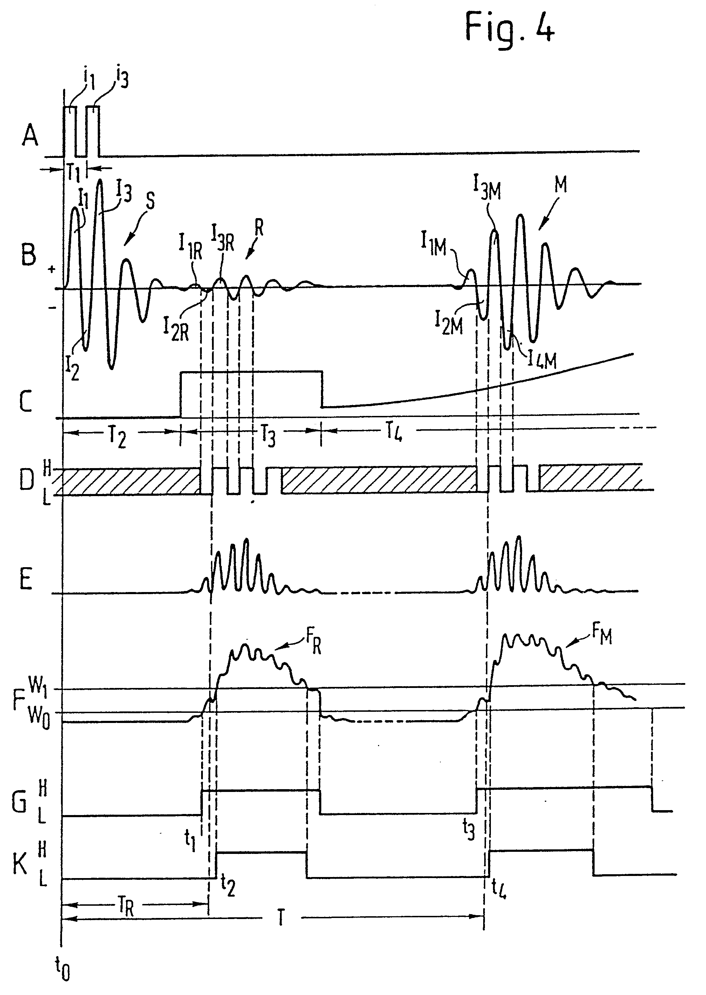

Im folgenden sei die Wirkung der Auswerteschaltung 34 (Fig. 1) in der Ausführung gemäss Fig. 3 unter Zuhilfenahme von Fig. 4 erläutert. Dabei sei lediglich die Anregung eines an die Leitung 32A angeschlossenen Wandlers 30 und die Auswertung von dessen Ausgangssignalen betrachtet; Anregung und Auswertung hinsichtlich weiterer, an die Leitungen 32B bis 32D angeschlossener Wandler erfolgen in entsprechender Weise.

Zu einem Zeitpunkt $t_0$ bewirkt das Steuerregister 106 das Ingangsetzen des Impulserzeugers 94, dessen Ausgangssignal als Kurve A in der obersten Teilfigur der Fig. 4 dargestellt ist. Der Impulserzeuger 94 erzeugt zwei Rechteckimpulse $i_1$, $i_3$ mit einer Folgezeit $T_1$ und mit einer der halben Folgezeit $T_1$ gleichen Impulsdauer.

Die Signale auf der Leitung 32A sind als Kurve B in der zweiten Teilfigur der Fig. 4 dargestellt. Die vom Impulserzeuger 94 erzeugten Impulse $i_1$, $i_3$ wirken als Anregungsimpulse für eine Senderschwingungsgruppe S mit Halbwellen $l_1$, $l_2$, $l_3$, ..., da die Induktivität der Drossel 100A zusammen mit der Kapazität des Schwingers 48 (Fig. 2) des an die Leitung 32A angeschlossenen Wandlers 30 einen von den Impulsen $i_1$, $i_3$ anregbaren Schwingkreis bildet. Die Folgezeit $T_1$ der Impulse $i_1$, $i_3$ ist so gut gewählt, dass der zweite Rechteckimpuls $i_3$ gerade dann beginnt, wenn die zweite Halbwelle $l_2$ der Senderschwingungsgruppe S ihre Amplitude erreicht hat. Die Senderschwingungsgruppe S wird mittels des Mulitplexers 104 von den diesem nachgeschalteten Schaltungsteilen ferngehalten; der Multiplexer 104 verbindet seinen an die Leitung 32A angeschlossenen Eingang erst dann mit seinen Ausgang, wenn die Senderschwingungsgruppe S auf Null abgeklungen ist, nämlich nach Ablauf einer vorgegebenen Zeitdauer $T_2$ seit dem Startzeitpunkt $t_0$. Anschliessend werden die im Ausgangssignal des an die Leitung 32A angeschlossenen Wandlers auftretenden Schwingungen vom Multiplexer 104 durchgelassen.

Wie Kurve B zeigt, erscheint im Ausgangssignal aufgrund der Aufnahme von an der Referenz-Reflexionsfläche 66 (Fig. 2) reflektierter Ultraschallschwingungen eine Referenzschwingungsgruppe R mit Halbwellen $I_{1R}$, $I_{2R}$, $I_{3R}$, . . . Später erscheint im Ausgangssignal die aufgrund der Reflexion im Bereich der zweiten Stirnseite 28 (Fig. 1) erhaltene Messschwingungsgruppe M mit Halbwellen $I_{1M}$, $I_{2M}$, $I_{3M}$, . . .

Die Ist-Referenzlaufzeit ist diejenige Laufzeit, die eine bestimmte ausgesandte Halbwelle benötigt, um nach Reflexion an der Referenz-Reflexionsfläche 66 (Fig. 2) wieder zum Wandler 30 zurückzukehren. Als Ist-Referenzlaufzeit kann daher beispielsweise die Zeitdauer vom Nulldurchgang zwischen der zweiten Halbwelle $I_2$ und der dritten Halbwelle $I_3$ der Senderschwingungsgruppe S bis zum Nulldurchgang zwischen der zweiten Halbwelle $I_{2R}$ und der dritten Halbwelle $I_{3R}$ der Referenzschwingungsgruppe R angesehen werden. Hierzu könnte man den genannten Nulldurchgang in der Senderschwingungsgruppe S zur Markierung des Beginns der Ist-Referenzlaufzeit und den genannten Nulldurchgang in der Referenzschwingungsgruppe R zur Markierung des Endes der zu messenden Ist-Referenzlaufzeit feststellen. Beim Ausführungsbeispiel wird jedoch nicht der tatsächliche Beginn einer zu messenden Laufzeit markiert, sondern lediglich das Ende der Laufzeit in bezug auf den Startzeitpunkt $t_0$ markiert. Hieraus errechnet der Prozessor 38 einen vorläufigen Wert der Laufzeit, aus der sich der tatsächliche Wert der Laufzeit durch Subtraktion einer Konstanten ergibt, da beispielsweise der Nulldurchgang zwischen der zweiten Halbwelle $I_2$ und der dritten Halbwelle $I_3$ der Senderschwingungsgruppe S eine vorgegebene zeitliche Lage bezüglich des Startzeitpunktes $t_0$ hat. Diese Art der Laufzeitmessung mit einem willkürlich markierten Beginn der Laufzeit gilt sowohl für die Messung der Ist-Referenzlaufzeit $T_R$ wie auch für die Messschwingungslaufzeit T (Fig. 4 unten).

Die Auswertung der Referenzschwingungsgruppe R und der Messschwingungsgruppe M erfolgt beim Ausführungsbeispiel mittels derselben Elemente der Auswerteschaltung 34. Insbesondere erfolgt die Markierung des Endes der jeweils zu bestimmenden Laufzeit, nämlich der Ist-Referenzlaufzeit $T_R$ oder der Messschwingungslaufzeit T, anhand des Nulldurchgangs der Rückflanke einer Halbwelle, und zwar beim Ausführungsbeispiel der zweiten Halbwelle $I_{2R}$ der Referenzschwingungsgruppe R und der zweiten Halbwelle $I_{2M}$ der Messschwingungsgruppe M, unter Mitwirkung des Komparators 108, der einen ersten Schwellwertschalter darstellt.

Das Ausgangssignal des Komparators 108 ist in der vierten Teilfigur der Fig. 4 als Kurve D dargestellt. In schraffierten Bereichen ist das Ausgangssignal nicht definiert oder interessiert für die Auswertung nicht. Im Bereich der Referenzschwingungsgruppe R und der Messschwingungsgruppe M wechselt das Ausgangssignal D seinen logischen Zustand (L bzw. H) jeweils bei einem Nulldurchgang der Referenzschwingungsgruppe R bzw. der Messschwingungsgruppe M.

Das Ausgangssignal D allein würde noch keine Aussage darüber erlauben, wann das Ende der zu messenden Laufzeit T, $T_R$ zu markieren ist, da es mehrfache Zustandswechsel zeigt. Eine Auswahl dieser Zustandswechsel wird dadurch erleichtert, dass der Komparator 108 dynamisch in der Weise wirkt, dass beim Wechsel von einer positiven Halbwelle, z.B. $I_{1R}$, zu einer negativen Halbwelle, im Beispiel $I_{2R}$, ein Zustandswechsel von H auf L und bei Wechsel von einer negativen Halbwelle zu einer positiven Halbwelle, beispielsweise von $I_{2R}$ zu $I_{3R}$, ein Zustandswechsel des Signals D von L auf H stattfindet. Daher liegt der zur Markierung der Laufzeit $T_R$ bzw. T heranzuziehende Nulldurchgang des zweiten Impulses $I_{2R}$ bzw. $I_{2M}$ bei einer Vorderflanke der im Signal D erscheinenden Impulse. Es müssen jedoch zusätzliche Mittel vorgesehen sein, um festzustellen, welche der im Signal D auftretenden Vorderflanken zur Markierung des Laufzeitendes heranzuziehen ist. Dies erfolgt im wesentlichen durch Mittel zur Detektion des Vorhandenseins der Referenzschwingungsgruppe R und der Messschwingungsgruppe M im Ausgangssignal des an die Leitung 32A angeschlossenen Wandlers; wird das Vorhandensein der Referenzschwingungsgruppe R oder der Messschwingungsgruppe M detektiert, so kann nach Erzeugung eines entsprechenden Signals angegeben werden, ob der unmittelbar darauf folgende, der zweite auf den Beginn des Signals folgende, der dritte auf den Beginn des Signals folgende oder ein sonstiger Signalwechsel im Signal D den gesuchten Nulldurchgang bezeichnet.

Als Mittel zur Detektion des Vorhandenseins der Referenzschwingungsgruppe R und der Messschwingungsgruppe M genügt es grundsätzlich, parallel zu einem – im Ausführungsbeispiel vom Komparator 108 gebildeten – ersten Schwellwertschalter einen zweiten Schwellwertschalter mit endlicher Schaltschwelle vorzusehen, der somit nur dann ein Ausgangssignal liefert, wenn das Ausgangssignal des betrachteten Wandlers eine bestimmte Amplitudenhöhe überschreitet. Die Ausgangssignale der beiden Schwellwertschalter können dann so verknüpft werden, dass diese gemeinsam einen hysteresebehafteten Verstärker bilden, dessen Ausgangssignal nur dann einen bestimmten Zustandswechsel (beispielsweise eine Impulsvorderflanke) zeigt, wenn eine negative Halbwelle genügender Amplitude in eine positive Halbwelle übergeht. Hierdurch kann mit relativ grosser Sicherheit festgestellt werden, dass der Nulldurchgang am Ende der zweiten Halbwelle $I_{2R}$ bzw. bei der Messung der Messschwingungs-Laufzeit T der Nulldurchgang am Ende der zweiten Halbwelle $I_{2M}$ vorliegt. Beim Ausführungsbeispiel ist jedoch gegenüber dieser möglichen Lösung eine andere Lösung gewählt, die zwar wegen des Vorhandenseins des Verstärkers 110 und des Wahrscheinlichkeitsdetektors 112 einen grösseren Bauaufwand erfordert, jedoch eine besonders hohe Sicherheit der genauen Ermittlung des gesuchten Nulldurchgangs bietet.

In der dritten Teilfigur der Fig. 4 ist der Verstärkungsfaktor des hinsichtlich seiner Verstärkung steuerbaren Verstärkers 110 als Kurve C dargestellt. Während der Zeitdauer $T_2$, in der die Senderschwingungsgruppe S erzeugt wird und wieder abklingt, kann der Verstärkungsfaktor grundsätzlich beliebig gewählt sein, da der Multiplexer 104 die Senderschwingungsgruppe S nicht zum Verstärker 110 durchlässt, jedoch wird der Verstärkungsgrad in dieser Zeit zweckmässig zur Vermeidung einer Drift auf Null eingestellt. Während der darauf folgenden Zeitdauer $T_3$ wird der Verstärkungsgrad auf einen relativ hohen, konstanten Wert eingestellt. Die Zeitdauer $T_3$ bildet ein Zeitfenster, in dem die Referenzschwinggruppe R in jedem Falle auch dann liegt, wenn sich unterschiedliche Ist-Referenzlaufzeiten $T_R$ bei unterschiedlichen Temperaturen, Drücken usw. des fliessfähigen Mediums im Zylinderraum 26 (Fig. 1) ergeben. Die Referenzschwingungsgruppe R wird also mit einem relativ hohen Verstärkungsfaktor im Verstärker 110 verstärkt. Während des anschliessenden Zeitraumes $T_4$, der in nicht dargestellter Weise vor dem Startzeitpunkt $t_0$ der nächstfolgenden Messung endet, wird der Verstärkungsfaktor des Verstärkers 110 entsprechend einer Exponentialfunktion ansteigend verändert. Hierdurch wird berücksichtigt, dass die Amplituden der Messschwingungsgruppe im Ausgangssignal eines Wandlers aufgrund der Dämpfung im fliessfähigen Medium des Zylinderraums 26 (Fig. 1) exponentiell mit dem zu messenden Relativabstand bzw. der Laufzeit abnehmen, so dass eine Kompensation in der Weise erfolgt, dass im Ausgangssignal des Verstärkers 110 die Amplituden der Messschwingungsgruppe M unabhängig von der jeweiligen Messschwingungslaufzeit T weitgehend konstant sind. Der konstante Verstärkungsfaktor während der Zeitdauer $T_3$ ist so gewählt, dass die Amplituden der hiermit verstärkten Referenzschwingungsgruppe R annähernd den korrespondierenden Amplituden der in der vorstehend beschriebenen Weise verstärkten Messschwingungsgruppe M gleich sind, dass also am Ausgang des Verstärkers 110 beispielsweise die Amplitude der zweiten Halbwelle $I_{2R}$ der Referenzschwingungsgruppe R gleich der Amplitude der zweiten Halbwelle $I_{2M}$ der Messschwingungsgruppe M ist, die verstärkte dritte Halbwelle $I_{3R}$ dieselbe Amplitude wie die verstärkte Amplitude der dritten Halbwelle $I_{3M}$ hat usw.

Das Ausgangssignal des Multipliergliedes 114 ist in der fünften Teilfigur der Figur 4 als Kurve E dargestellt. Es ist gegenüber den als Wechselspannung vorliegenden Referenz- und Messschwingungen im Ausgangssignal des an die Leitung 32A angeschlossenen Wandlers gleichgerichtet und zweckmässig wie beim Ausführungsbeispiel aufgrund der Wirkung des Multiplier-gliedes 114 quadriert. Das durch die Integration dieses Signals am Ausgang des Integrators 118 erhaltene Integrationsergebnis ist in der sechsten Teilfigur der Fig. 4 als Kurve F dargestellt, die zwei, der Referenzschwingungsgruppe R bzw. der Messschwingungsgruppe M entsprechende Auslenkungen $F_R$ und $F_M$ aufweist.

Das von der Kurve F dargestellte Integrationsergebnis und insbesondere die Auslenkungen $F_R$, $F_M$ bilden ein Mass für die Wahrscheinlichkeit, dass eine auf der Leitung 32A auftretende Schwingung die Referenzschwingungsgruppe bzw. die Messschwingungsgruppe ist, und dass diese Gruppen ungestört aufgenommen wurden und daher auswertbar sind. So können beispielsweise Reflexionen innerhalb des Zylinderraums 26 (Fig. 1) zu einer Verzerrung oder sogar zu Phasensprüngen in der Messschwingungsgruppe M führen, wodurch sich die Amplitude der Auslenkung $F_M$ wesentlich verringert. Von solchen Verzerrungen oder Phasensprüngen sind jedoch die beiden ersten Halbwellen $I_{1M}$, $I_{2M}$ erfahrungsgemäss am wenigsten betroffen, was einen Grund dafür bildet, den Nulldurchgang am Ende der zweiten Halbwelle $I_{2M}$ auszuwerten, wobei sich die Bevorzugung gegenüber dem Nulldurchgang am Ende der ersten Halbwelle $I_{1M}$ aus der grösseren Amplitude der zweiten Halbwelle ergibt.

Die Ausgangssignale der Schwellwertschalter 120, 122 sind als Kurven G, K in den beiden untersten Teilfiguren der Fig. 4 dargestellt. Der Schwellwertschalter 120 schaltet hysteresefrei bei einem relativ niedrigen, einer Wahrscheinlichkeit $w_0$ entsprechenden Wert des Integrationsergebnisses. Der Schwellwertschalter 122 schaltet bei einem höheren Wahrscheinlichkeitswert $w_1$ entsprechenden höheren Wert des Integrationsergebnisses, wobei dieser Wert jedoch merklich niedriger als das Maximum der Auslenkungen $F_R$, $F_M$ liegt. Der geringere Wahrscheinlichkeitswert $w_0$ wird zu einem Zeitpunkt $t_1$ bzw. $t_3$ bereits kurz nach Beginn der Referenzschwingungsgruppe R bzw. der Messschwingungsgruppe M erreicht. Der höhere Wahrscheinlichkeitswert $w_1$ wird zu einem etwas späteren Zeitpunkt $t_2$ bzw. $t_4$ überschritten.

Es hat sich nun gezeigt, dass bei geeigneter Wahl des Wahrscheinlichkeitswertes $w_0$ der Nulldurchgang der Rückflanke der zweiten Halbwelle $I_{2R}$ bzw. $I_{2M}$ stets eine unverwechselbare zeitliche Lage bezüglich des Ansprechens des Schwellwertschalters 120 zum Zeitpunkt $t_1$ bzw. $t_3$ hat; bei der in Fig. 4 vorausgesetzten Wahl des Wahrscheinlichkeitswertes $w_0$ ist der gesuchte Nulldurchgang derjenige, der nach dem Zeitpunkt $t_1$ bzw $t_3$ als erster Nulldurchgang auftritt. Es ist ohne weiteres ersichtlich, dass bei Wahl eines höheren Wertes der Wahrscheinlichkeit als Schwellenwert des Schwellwertschalters 120, beispielsweise in der Grössenordnung des beim Ausführungsbeispiel gewählten Wahrscheinlichkeitswertes $w_1$, der gesuchte Nulldurchgang auch derjenige sein könnte, der unmittelbar zeitlich vor dem Ansprechen des Schwellwertschalters 120 liegt, und je nach Wahl des auszuwertenden Nulldurchgangs könnte der dementsprechende, auszuwertende Zustandswechsel im Signal D auch der übernächste nach dem Zeitpunkt $t_1$ bzw. $t_3$ sein. In jedem Fall aber wird bei mehreren aufeinanderfolgenden Zustandswechseln des Ausgangssignals des Komparators 108 bzw. eines sonstigen ersten Schwellwertschalters nur derjenige Zustandswechsel zur Markierung des Endes eines Laufzeit $T_R$ bzw. T wirksam gemacht, der eine vorgegebene zeitliche Lage bezüglich des Ausgangssignals des Schwellwertschalters 120 hat. Diese zeitliche Lage kann in einfacher Weise mittels geeigneter logischer Verknüpfungsmittel festgestellt werden, die am Eingang des Zwischenspeichers 86 oder aber auch im Prozessor 38 vorgesehen sein können.

Der zeitliche Abstand $t_2-t_1$ bzw. $t_4-t_3$, mit dem der Schwellwertschalter 122 nach dem Schwellwertschalter 120 auf das Ansteigen der Wahrscheinlichkeit zu Beginn einer Auslenkung $F_R$ bzw. $F_M$ anspricht, ist ein Massstab dafür, inwieweit die Referenzschwingungsgruppe R bzw. die Messschwingungsgruppe M ungestört und unverzerrt zumindest hinsichtlich der beiden ersten Halbwellen empfangen wurde. Wenn der zeitliche Abstand $t_4-t_3$ sich ausgehend von einem ungestörten Zustand vergrössert, so liegt dies an einer Verzerrung oder Dämpfung der Messschwingungsgruppe M, wodurch deren Auswertung erschwert wird. Um die Auswertbarkeit wieder herzustellen, wird in diesem Fall der Verstärkungsgrad des Verstärkers 110 erhöht, bis der zeitliche Abstand $t_4-t_3$ wieder den ursprünglichen Wert hat. Es erfolgt so eine Regelung des Verstärkungsgrades des steuerbaren Verstärkers 110 während des Zeitabschnittes $T_4$ im Sinne eines Konstanthaltens des zeitlichen Abstandes $t_4-t_3$. In entsprechender Weise erfolgt ebenfalls eine Regelung des Verstärkungsgrades im Zeitraum $T_3$ im Sinne eines Konstanthaltens des zeitlichen Abstands $t_2-t_1$, um die Auswertbarkeit der Referenzschwingungsgruppe R zu gewährleisten.

Die vorstehend beschriebene Regelung erfolgt durch geeignete Mittel im Prozessor 38. Grundsätzlich wäre es möglich, den Verstärkungsgrad des Verstärkers 110 für jede einzelne Laufzeitmessung aufgrund einiger vorangehender Messwerte des zeitlichen Abstandes $t_4-t_3$ bzw. $t_2-t_1$ festzulegen. Beim Ausführungsbeispiel ist jedoch der grundsätzliche zeitliche Verlauf des Verstärkungsgrades nach jedem Startzeitpunkt $t_0$, wie er durch die Kurve C dargestellt ist, qualitativ durch eine geeignete Programmsteuerung in der Steuereinheit 84 vorgegeben, beispielsweise mittels eines Unterprogrammspeichers 124 des Steuerregisters 106. Dies hat den Vorteil, dass der Prozessor 38 nur mit grosser Zeitkonstante oder in relativ zur Häufigkeit der Laufzeitmessungen grossen gegenseitigen Abständen eine Nachregelung des Verstärkungsgrades bewirken muss, indem beispielsweise die im Unterprogramm gespeicherten Verstärkungswerte mit einem geeigneten Korrekturfaktor multipliziert werden.

Beim Ausführungsbeispiel ist die Laufzeit des Verzögerungsgliedes 116 derart gewählt, dass die Verzögerung bei der Frequenz der Senderschwingung S von 500 kHz einer Phasenverschiebung um eine halbe Wellenlänge entspricht. Hierdurch wird die vom Multiplizierglied 114 und dem Verzögerungsglied 116 gebildete, quadrierend wirkende Schaltung gleichzeitig auch ein für die Frequenz der Senderschwingungen selektives Filter, was dazu beiträgt, dass das Integrationsergebnis F bereits relativ kurz nach dem Beginn einer Referenzschwingungsgruppe R oder einer Messschwingungsgruppe M eine verlässliche Aussage darüber erlaubt, ob diese Schwingungen hinsichtlich Frequenz und Phasenlage unverzerrt sind. Grundsätzlich wäre es jedoch auch möglich, das Multiplizierglied 114 und das Verzögerungsglied 116 durch eine Gleichrichterschaltung zu ersetzen.

**Patentansprüche**

1. Einrichtung zur Bestimmung des Relativabstandes zwischen den sich gegenüberliegenden Stirnseiten (24, 28) eines Zylinders (12) und eines Kolbens (14) einer Zylinder-Kolben-Einheit (10), die einen mit einem fliessfähigen Medium gefüllten Zylinderraum (26) aufweist, umfassend einen an der einen der beiden sich gegenüberliegenden Stirnseiten gehaltenen Ultraschallwandler (30), der bei Anregung mittels eines elektrischen Anregungsimpulses ($i_1$, $i_3$) eine Gruppe (S) von Ultraschallschwingungen in Richtung auf die andere Stirnseite (28) des Zylinderraums (26) hin abgibt und bei Beaufschlagung mit Ultraschallschwingungen ein entsprechendes elektrisches Ausgangssignal abgibt, einen elektrischen Impulserzeuger (94) mit dessen Ausgang der Wandler (30) gekoppelt ist, und eine Auswerteschaltung (34) mit Mitteln (38, 86) zur Messung der Messschwingungs-Laufzeit (T) von Ultraschallschwingungen zwischen dem Erzeugen eines Anregungsimpulses ($i_1$, $i_3$) und dem Auftreten einer entsprechenden Messschwingungsgruppe (M) im Ausgangssignal des Wandlers (30), dadurch gekennzeichnet, dass innerhalb des Zylinderraumes (26) eine Referenzstrecke vorgesehen ist, in die an einem Ende (42) Gruppen (S) von Ultraschallschwingungen eingespeist werden und die an ihrem anderen Ende eine diese Ultraschallschwingungen reflektierende Referenz-Reflexionsfläche (66) aufweist, dass die Auswerteschaltung Mittel (38, 36) zur Messung der Ist-Referenzlaufzeit ($T_R$) von Ultraschallschwingungen in der Referenzstrecke sowie Rechenmittel (38) umfasst, die ein aufgrund der Messung der Messschwingungslaufzeit erhaltenes Messsignal in Abhängigkeit von der Abweichung der Ist-Referenzlaufzeit ($T_R$) von einer vorgegebenen Soll-Referenzlaufzeit verändern, und dass der Wandler (30) einen inkompressiblen Träger (44), einen parallel zu einer ebenen, in einer Normalquerschnittsfläche des Zylinders (12) liegenden Fläche (46) des Trägers (44) zum Zylinderraum (26) hin im Abstand von dieser Fläche (46) liegenden, plättchenförmigen piezoelektrischen Schwinger (48), eine zu diesem parallele, zur anderen Stirnseite (28) hin weisende, von dem fliessfähigen Medium beaufschlagte Schallabstrahlungsfläche (42) sowie Mittel (50, 52, 54) zur Wellenwiderstands-Fehlanpassung zwischen dem Schwinger (48) und dem Träger (44) und Mittel (56, 58, 60, 62) zur Wellenwiderstands-Anpassung zwischen dem Schwinger (48) und der Schallabstrahlungsfläche (42) umfasst.

2. Einrichtung nach Anspruch 1, dadurch gekennzeichnet, dass die Mittel zur Fehlanpassung mindestens ein $\lambda/4$-Plättchen (50, 54) umfassen, dessen Wellenwiderstand mehrfach geringer als der Wellenwiderstand des Schwingers (48) ist, vorzugsweise zwei solche Plättchen (50, 54) zwischen denen ein $\lambda/4$-Plättchen (52) mit wesentlich höherem Wellenwiderstand liegt, und dass die Mittel zur Wellenwiderstands-Anpassung mehrere $\lambda/4$-Plättchen (56, 58, 60, 62) umfassen, deren Wellenwiderstand zwischen demjenigen des Schwingers (48) und demjenigen des fliessfähigen Mediums insbesondere entsprechend einer abnehmenden geometrischen Reihe gestuft liegt, wobei vorzugsweise ein an oder nahe der Schallabstrahlungsfläche (42) liegendes Plättchen (58) aus einem zur Herstellung von Schaltungsplatinen geeigneten Material besteht und mit Befestigungsmitteln (70) für die Referenz-Reflexionsfläche (66) versehen ist.

3. Einrichtung nach Anspruch 1 oder 2, dadurch gekennzeichnet, dass die Referenz-Reflexionsfläche (66) kleiner als die Schallabstrahlungsfläche (42) und mit gegenüber der Flächennormalen der Schallabstrahlungsfläche (42) geringfügig abweichender Flächennormalen angeordnet ist, so dass von dem Wandler (30) nach dem Aussenden einer Gruppe (S) von Ultraschallschwingungen zunächst eine Referenzschwingungsgruppe (R) und danach eine Messschwingungsgruppe (M) aufgenommen wird, die in zeitlichem Abstand nacheinander im Ausgangssignal des Wandlers (30) erscheinen.

4. Einrichtung nach Anspruch 3, dadurch gekennzeichnet, dass ein erster Schwellwertschalter (108) vorgesehen ist, der mit dem gegebenenfalls gefilterten, verstärkten und/oder amplitudengeregelten Ausgangssignal des Wandlers (30) beaufschlagt ist und der bei Nulldurchgängen seines Eingangssignals den Zustand seines Ausgangssignals (D) wechselt, dass Mittel (112) zur Detektion des Vorhandenseins der Referenzschwingungsgruppe (R) und der Messschwingungsgruppe (M) im Ausgangssignal des Wandlers (30) vorgesehen sind und dass die Mittel (38) zur Messung der Ist-Referenzlaufzeit ($T_R$) und der Messschwingungslaufzeit (T) das Ende der jeweiligen Laufzeit ($T_R$, T) in Abhängigkeit von einem Zustandswechsel des Ausgangssignals (D) des ersten Schwellwertschalters (108) und in Abhängigkeit von der Detektion der Referenzschwingungsgruppe (R) bzw. der Messschwingungsgruppe (M) erfassen.

5. Einrichtung nach Anspruch 4, dadurch gekennzeichnet, dass die Mittel (112) zur Detektion des Vorhandenseins der Referenzschwingungsgruppe (R) und der Messschwingungsgruppe (M) im Ausgangssignal des Wandlers (30) eine Schaltung (114, 116) zur Gleichrichtung, vorzugsweise Quadrierung der Ausgangssignale des Wandlers (30), einen dieser Schaltung (114, 116) nachgeschalteten, vorzugsweise als Verschwindsignalintegrator ausgebildeten Integrator (118) und einen letzterem nachgeschalteten zweiten Schwellwertschalter (120) umfassen, der beim Überschreiten eines vorgegebenen Schwellenwertes ($w_0$) des Integrationsergebnisses (F) ein Ausgangssignal (G) abgibt, und dass logische Verknüpfungsmittel vorgesehen sind, die bei mehreren aufeinanderfolgenden Zustandswechseln des Ausgangssignals (D) des ersten Schwellwertschaltes (108) nur denjenigen Zustandswechsel zur Markierung des Endes einer Laufzeit ($T_R$, T) wirksam machen, der eine vorgegebene zeitliche Lage bezüglich des Ausgangssignals (G) des zweiten Schwellwertschalters (120) hat, vorzugsweise den beim Nulldurchgang am Ende der Rückflanke der zweiten Halbwelle ($I_{2R}$, $I_{2M}$) der Referenzschwingungsgruppe (R) bzw. der Messschwingungsgruppe (M) auftretenden Zustandswechsel.

6. Einrichtung nach Anspruch 5, gekennzeichnet durch einen in den Signalübertragungskanal (102, 110, 112) zwischen dem Wandler (30) und dem zweiten Schwellwertschalter (120) eingeschalteten, vorzugsweise der Schaltung (114, 116) zur Quadrierung vorgeschalteten, hinsichtlich seiner Verstärkung steuerbaren Verstärker (110), durch einen mit seinem Eingang dem Eingang des zweiten Schwellwertschalters (120) parallel geschalteten dritten Schwellwertschalter (122), der beim Überschreiten eines gegenüber dem Schwellenwert ($w_0$) des zweiten Schwellwertschaltes (120) betragsmässig höheren zweiten Schwellwertschalters (120) betragsmässig höheren zweiten Schwellenwertes ($w_1$) des Integrationsergebnisses (F) ein Ausgangssignal (K) erzeugt, durch Mittel (38) zur Messung des zeitlichen Abstandes ($t_2$-$t_1$; $t_4$-$t_3$) zwischen den Ausgangssignalen (G, K) des zweiten und dritten Schwellwertschalters (120, 122) und durch Mittel (38, 124) zur Regelung des Verstärkungsgrades des steuerbaren Verstärkers (110) im Sinne eines Konstanthaltens des genannten zeitlichen Abstandes ($t_2$-$t_1$; $t_4$-$t_3$).

7. Einrichtung nach Anspruch 6, dadurch gekennzeichnet, dass dem steuerbaren Verstärker (110) ein Programmgeber (124) zugeordnet ist, der während einer das Auftreten der Referenzschwingungsgruppe (R) umfassenden und vorzugsweise gegenüber der Dauer dieses Auftretens geringfügig längeren Zeitdauer ($T_3$) die Verstärkung auf einen konstanten Wert einstellt und anschliessend die Verstärkung ausgehend von einem gegenüber diesem konstanten Wert geringeren Wert entsprechend einer exponentialen Funktion erhöht, und dass die Mittel (36) zur Regelung des Verstärkungsgrades auf den Programmgeber (124) im Sinne einer Modifizierung von dessen die Verstärkung steuernden Ausgangssignal einwirken.

## Claims

1. Device for determining the relative distance between the opposite ends (24, 28) of a cylinder (12) and piston (14) of a cylinder/piston unit (10) which has a cylinder chamber (26) filled with a flowable medium, comprising an ultrasonic transducer (30) which is mounted on one of the two opposite ends and which, upon being excited by means of an electric excitation pulse ($i_1$, $i_3$), emits a series (S) of ultrasonic oscillations in the direction of the other end (28) of the cylinder chamber (26) and, when subjected to the effect of ultrasonic oscillations, emits a corresponding electric output signal, an electrical pulse generator (94) to the output of which the transducer (30) is connected, and an evaluation circuit (34) comprising means (38, 86) for measuring the reference oscillation interval (T) of ultrasonic oscillations between the generation of an excitation pulse ($i_1$, $i_3$) and the occurrence of a corresponding series (M) of reference oscillations in the output signal of the transducer (30), characterized in that there is provided inside the cylinder chamber (26) a reference section into which series (S) of ultrasonic oscillations are fed at one end (42) and which has at its other end a reference reflection surface (66) for reflecting these ultrasonic oscillations, that the evaluation circuit comprises means (38, 36) for measuring the actual reference delay ($T_R$) of ultrasonic oscillations in the reference section, as well as data processing means (38) which vary a measuring signal obtained as a result of measurement of the reference oscillation delay depending on the deviation of the actual reference interval ($T_R$) from a preset desired reference interval, and that the transducer (30) comprises an incompressible carrier (44), a plate-shaped piezoelectric oscillator (48) which lies parallel to a flat surface (46) of the carrier (44) in a normal cross-sectional area of the cylinder (12) in the direction of the cylinder chamber (26) and at a distance from the said surface (46), a sound radiation surface (42) which is parallel to the said oscillator, is directed towards the other end (28) and in contact with the flowable medium, as well as means (50, 52, 54) for the characteristic impedance mismatch between the oscillator (48) and the carrier (44) and means (56, 58, 60, 62) for characteristic impedance matching between the oscillator (48) and the sound radiation surface (42).

2. Device according to Claim 1, characterised in that the mismatch means comprise at least one quarter-wave plate (50, 54) having a characteristic impedance several times lower than the characteristic impedance of the oscillator (48), preferably two such plates (50, 54) between which lies a quarter-wave plate (52) having a substantially higher characteristic impedance, and that the means for characteristic impedance matching comprise a plurality of quarter-wave plates (56, 58, 60, 62), the characteristic impedance of which lies between that of the oscillator (48) and that of the flowable medium particularly corresponding to a decreasing geometric progression, preferably one plate (58) which lies on or near the sound radiation surface (42) being made of a material suitable for the manufacture of circuit boards and being provided with means (70) for securing the reference reflection surface (66).

3. Device according to Claim 1 or 2, characterised in that the reference reflection surface (66) is smaller than the sound radiation surface (42) and is arranged with normals to the surface which differ slightly from those to the sound radiation surface (42) so that, following the emission of a series (S) of ultrasonic oscillations, the transducer (30) senses firstly a series (R) of reference oscillations and then a series (M) of measuring oscillations which appear successively at time intervals in the output signal of the transducer (30).

4. Device according to Claim 3, characterised in that there ist provided a first threshold switch (108) which is activated by the, if necessary, filtered, amplified and/or amplitude-regulated output signal of the transducer (30) and which, in the event of zero transmission of the input signal of the transducer, changes the state of its output signal (D), that means (112) are provided for detecting the presence of the series (R) of reference oscillations and the series (M) of measuring oscillations in the output signal of the transducer (30), and that means (38) for measuring the actual reference interval ($T_R$) and measuring oscillation interval (T) detect the end of each delay ($T_R$, T) depending on a change of state of the output signal (D) of the first threshold switch (108) and depending on the detection of the series (R) of reference oscillations or series (M) of measuring oscillations.

5. Device according to Claim 4, characterised in that the means (112) for detecting the presence of the series (R) of reference oscillations and series (M) of measuring oscillations in the output signal of the transducer (30) comprise a circuit (114, 116) for rectifying, and preferably squaring the output signals of the transducer (30), an integrator (118) which is arranged after this circuit (114, 116) and is preferably in the form of a fading signal integrator and a second threshold switch (120) which is arranged after the latter and which emits an output signal (G) when a preset threshold value ($w_0$) of the integration result (F) is exceeded, and that there are provided logic elements which, in the event of several successive changes of state in the output signal (D) of the first threshold switch (108), activate only that change of state for marking the end of a delay ($T_R$, T) which has a preset temporary position relative to the output signal (G) of the second threshold switch (120), preferably the change of state which occurs during crossover at the end of the trailing edge of the second half-wave ($I_{2R}$, $I_{2M}$) of the series (R) of reference oscillations or series (M) of measuring oscillations.

6. Device according to Claim 5, characterised by an amplifier (110) which is arranged in the signal transmission channel (102, 110, 112) between the transducer (30) and the second threshold switch (120), is connected in series preferably with the squaring circuit (114, 116) and can be controlled with respect to its amplification, by a third threshold switch (122) which is connected with its input parallel with the input of the second threshold switch (120) and which generates an output signal (K) when a second threshold value $(w_1)$ of the integration result (F) which is higher in amount than the threshold value $(w_0)$ of the second threshold switch (120) is exceeded, by means (38) for measuring the time interval $(t_2-t_1; t_4-t_3)$ between the output signals (G, K) of the second and third threshold switches (120, 122) and by means (38, 124) for regulating the amplification factor of the controllable amplifier (110) for the purpose of keeping the said time interval $(t_2-t_1; t_4-t_3)$ constant.

7. Device according to Claim 6, characterised in that the controllable amplifier (110) is associated with a program generator (124) which, during a period of time $(T_3)$ which comprises the occurrence of the series (R) of reference oscillations and is preferably slightly longer than the duration of this occurrence, sets the amplification for a constant value and then, starting from a value lower than this constant value, the amplification increases according to an exponential function, and that the means (36) for regulating the amplification factor influence the program generator (124) for the purpose of modifying its output signal which controls amplification.

**Revendications**

1. Installation pour déterminer la distance relative entre les faces frontales en regard (24, 28) d'un cylindre (12) et d'un piston (14) d'une unité à cylindre et piston (10) qui présente une chambre cylindrique (26) remplie d'un milieu fluide comprenant un transducteur ultrasonore (30) tenu par l'une des deux faces frontales en regard qui, lorsqu'il est excité au moyen d'impulsions d'excitation $(i_1, i_3)$ émet un groupe (S) de vibrations ultrasonores en direction de l'autre face frontale (28) de la chambre cylindrique (26) et à la réception de vibrations ultrasonores fournit un signal de sortie électrique correspondant, un générateur d'impulsions électriques (94) à la sortie duquel est couplé le transducteur (30) et un appareillage de traitement (34) comportant des moyens (38, 86) pour mesurer le temps de propagation d'oscillations de mesure (T) des vibrations ultrasonores entre la production d'une impulsion d'excitation $(i_1, i_3)$ et l'apparition d'un groupe de vibrations de mesure (M) correspondant dans le signal de sortie de transducteur (30), caractérisé en ce que, il est prévu à l'intérieur de la chambre cylindrique (26) un trajet de référence sur lequel sont introduits, à une extrémité (42) des groupes (S) de vibrations ultrasonores, et qui présente à son autre extrémité une surface de réflexion de référence (66) réfléchissant ces vibrations ultrasonores, l'appareillage de traitement comprend des moyens (38, 36) pour mesurer le temps de propagation de référence réel $(T_R)$ de vibrations ultrasonores sur le trajet de référence, ainsi que des moyens de calcul (38) qui modifient un signal de mesure obtenu sur la base de la mesure du temps de propagation des vibrations de mesure en fonction de l'écart du temps de propagation de référence réel $(T_R)$ par rapport à un temps de propagation de référence prescrit prédéterminé, et le transducteur (30) comprend un support incompressible (44), un oscillateur piézo-électrique (48) en forme d'une plaquette, parallèle à une surface plane (46) du support (44) située dans une surface de section droite normale du cylindre (12) du côté de la chambre cylindrique (26) à distance de cette surface (46), une surface de rayonnement acoustique parallèle à cet oscillateur, tournée vers l'autre face frontale (28), rencontrée par le milieu fluide, ainsi que des moyens (50, 52, 54) de désadaptation d'impédance caractéristique entre l'oscillateur (48) et le support (44) et des moyens (56, 58, 60, 62) d'adaptation d'impédance caractéristique entre l'oscillateur (48) et la surface de rayonnement acoustique (42).

2. Installation selon la revendication 1, caractérisée en ce que les moyens de désadaptation comprennent au moins une plaquette-$\lambda$/4 (50,54) dont l'impédance caractéristique est plusieurs fois inférieure à l'impédance caractéristique de l'oscillateur (48), de préférence deux plaquettes (50, 54) de ce type entre lesquelles se trouve une plaquette-$\lambda$/4 (52) d'impédance caractéristique beaucoup plus élevée, et les moyens d'adaptation d'impédance caractéristique comprennent plusieurs plaquettes-$\lambda$/4 (56, 58, 60, 62) dont l'impédance caractéristique est étagée entre celle de l'oscillateur (48) et celle du milieu fluide, en particulier selon une série géométrique décroissante, une plaquette (58) située au contact de la surface de rayonnement acoustique (42) ou proche de celle-ci étant, de préférence, constituée par une matière appropriée à la fabrication de plaquettes de circuits imprimés et prévue avec des moyens de fixation (70) pour la surface de réflexion de référence (66).

3. Installation selon la revendication 1 ou 2, caractérisée en ce que la surface de réflexion de référence (66) est plus petite que la surface de rayonnement acoustique (42) et disposée avec la normale à cette surface légèrement écartée par rapport à la normale à la surface de rayonnement acoustique (42), de sorte que le transducteur (30) reçoit, après l'émission d'un groupe (S) de vibrations ultrasonores, d'abord un groupe de vibrations de référence (R), puis un groupe de vibrations de mesure (M), qui apparaissent dans le signal de sortie du transducteur (30) écartés l'un de l'autre par un intervalle de temps.

4. Installation selon la revendication 3, caractérisée en ce qu'il est prévu un premier interrupteur à seuil (108) auquel est appliqué le signal de sortie du transducteur (30), éventuellement filtré, amplifié et/ou réglé en amplitude et dont l'état du signal de sortie (D) change lors des passages par zéro de son signal d'entrée, des moyens (112) pour la détection de la présence du groupe de vibrations de référence (R) et du groupe de vibrations de mesure (M) dans le signal de sortie du transducteur (30), et les moyens (38) de mesure du temps de propagation de référence réel ($T_R$) et du temps de propagation (T) des vibrations de mesure détectent la fin de chacun des temps de propagation ($T_R$, T) en fonction d'un changement d'état du signal de sortie (D) du premier interrupteur à seuil (108) et en fonction de la détection du groupe de vibrations de référence (R) ou du groupe de vibrations de mesure (M).

5. Installation selon la revendication 4, caractérisée en ce que les moyens (112) de détection de la présence du groupe de vibrations de référence (R) et du groupe de vibrations de mesure (M) dans le signal de sortie du transducteur (30) comprennent un circuit (114, 116) pour redresser, de préférence élever au carré, les signaux de sortie du transducteur (30), un intégrateur (118) monté en aval de ce circuit (114, 116), réalisé, de préférence, sous la forme d'un intégrateur de signaux évanescents et un second interrupteur à seuil (120) monté en aval de ce dernier, qui délivre, lors du dépassement d'une valeur de seuil ($w_0$) prédéterminée du résultat d'intégration (F), un signal de sortie (G), et en ce qu'il est prévu des éléments de logique qui n'activent, en cas de plusieurs changements d'état successifs du signal de sortie (D) du premier interrupteur à seuil (108) que le changement d'état marquant la fin d'un temps de propagation ($T_R$, T) qui présente une situation dans le temps prédéterminée par rapport au signal de sortie (G) du second interrupteur à seuil (120), de préférence le changement d'état se présentant lors du passage par zéro à la fin du flanc arrière de la seconde demi-onde ($I_{2R}$, $I_{2M}$) du groupe de vibrations de référence (R) et du groupe de vibrations de mesure (M) respectivement.

6. Installation selon la revendication 5, caractérisée par un amplificateur (110), intercalé dans le canal de transmission des signaux (102, 110, 112) entre le transducteur (30) et le second interrupteur à seuil (120), de préférence monté en amont du circuit (114, 116) d'élévation au carré, dont le gain peut être réglé, par un troisième interrupteur à seuil (122) dont l'entrée est montée en parallèle sur l'entrée du second interrupteur à seuil (120), qui engendre un signal de sortie (K) lorsque le résultat d'intégration (F) dépasse une seconde valeur de seuil ($w_1$) dont l'amplitude est supérieure à celle de la valeur de seuil ($w_0$) du second interrupteur à seuil (120), par des moyens (38) de mesure de l'intervalle de temps ($t_2-t_1$; $t_4-t_3$) entre les signaux de sortie (G, K) du second interrupteur à seuil (120) et du troisième interrupteur à seuil (122) et par des moyens (38, 124) de réglage du gain de l'amplificateur réglable (110) dans le sens du maintien constant dudit intervalle de temps ($t_2-t_1$; $t_4-t_3$).

7. Dispositif selon la revendication 6, caractérisé en ce qu'est relié à l'amplificateur réglable (110) un générateur de programmes (124) qui règle le gain à une valeur constante pendant une durée ($T_3$) comprenant l'apparition du groupe de vibrations de référence (R) et, de préférence, légèrement supérieure à la durée de leur apparition et augmente immédiatement après le gain à partir d'une valeur inférieure à cette valeur constante selon une fonction exponentielle, et en ce que les moyens (36) de réglage du gain agissent sur le générateur de programmes (124) dans le sens d'une modification de son signal de sortie réglant le gain.

Fig. 1

Fig. 2

Fig.3

0 104 172

# Fig. 4

21